# EUROPEAN PATENT APPLICATION

(11) **EP 4 131 921 A1**
(43) Date of publication of application: **08.02.2023**
(21) Application number: 20926831.7
(22) Date of filing: 24.03.2020
(51) Int. Cl.: H04N 5/232, G06T 1/00, H04N 5/225, H04N 5/235

(54) **IMAGE CAPTURING CONTROL SYSTEM, IMAGE CAPTURING DEVICE, IMAGE CAPTURING CONTROL METHOD, AND COMPUTER PROGRAM**

(71) Applicant: NEC Corporation, 108-8001 Tokyo (JP)
(72) Inventor: KODA, Yoshinori, Tokyo 108-8001 (JP)
(74) Representative: Betten & Resch
(86) International application number: PCT/JP2020/013076
(87) International publication number: WO 2021/192053

(57) **Abstract**

An imaging control system includes: a light amount control unit that controls an amount of light applied to a target person in accordance with an operation amount of a first operation by an operator; and an imaging instruction unit that gives an instruction to image a biological pattern of the target person in response to a second operation that is different from the first operation by the operator. According to the imaging control system, the amount of light is controlled by the first operation and an instruction to perform the imaging can be given by the second operation. It is thus possible to properly image the biological pattern, such as fingerprints.

## Description

### Technical Field

This disclosure relates to an imaging control system, an imaging apparatus, an imaging control method, and a computer program that image a biological pattern of a target person.

### Background Art

A known system of this type controls light applied to a subject when capturing an image (e.g., a fingerprint image, etc.) to use for biometric authentication or the like. For example, Patent Literature 1 discloses a technique/technology of automatically determining the brightness of an area in which a finger to image its fingerprints is placed, and of performing a control for increasing the uniformity of an amount of light.

As other related arts, for example, Patent Literatures 2 to 5 disclose a technique/technology of using a slide switch and a pressure sensor for operation in the imaging.

### Citation List

### Patent Literature

Patent Literature 1: JP2005-174280A
Patent Literature 2: JP2009-206829A
Patent Literature 3: JP2002-287204A
Patent Literature 4: JP2009-297428A
Patent Literature 5: JPH11-142719A

### Summary

### Technical Problem

In the Patent Literatures described above, it is hardly possible to perform an operation for adjusting the amount of light in accordance with a target person's condition, and an operation for performing the imaging in a state in which the amount of light is adjusted.

It is an example object of this disclosure to provide an imaging control system, an imaging apparatus, an imaging control method, and a computer program for solving the above-described problems.

### Solution to Problem

An imaging control system according to an example aspect of this disclosure includes: a light amount control unit that controls an amount of light applied to a target person in accordance with an operation amount of a first operation by an operator; and an imaging instruction unit that gives an instruction to image a biological pattern of the target person in response to a second operation that is different from the first operation by the operator.

An imaging apparatus according to an example aspect of this disclosure includes an imaging unit that images a biological pattern of a target person; an irradiation unit that irradiates a living body of the target person with light; a first detection unit that detects an operation amount of a first operation by an operator; a light amount control unit that controls an amount of light applied to the target person in accordance with the operation amount of the first operation; a second detection unit that detects a second operation that is different from the first operation by the operator; and an imaging instruction unit that gives an instruction to image the biological pattern of the living body of the target person in response to the second operation.

An imaging control method according to an example aspect of this disclosure includes controlling an amount of light applied to a target person in accordance with an operation amount of a first operation by an operator; and giving an instruction to image a biological pattern of the target person in response to a second operation that is different from the first operation by the operator.

A computer program according to an example aspect of this disclosure operates a computer: to control an amount of light applied to a target person in accordance with an operation amount of a first operation by an operator; and to give an instruction to image a biological pattern of the target person in response to a second operation that is different from the first operation by the operator.

### Brief Description of Drawings

[FIG. 1] FIG. 1 is a block diagram illustrating an overall configuration of an imaging control system according to a first example embodiment.
[FIG. 2] FIG. 2 is a block diagram illustrating a hardware configuration of the imaging control system according to the first example embodiment.
[FIG. 3] FIG. 3 is a flowchart illustrating a flow of operation of the imaging control system according to the first example embodiment.
[FIG. 4] FIG. 4 is a block diagram illustrating an overall configuration of an imaging control system according to a second example embodiment.
[FIG. 5] FIG. 5 is a flowchart illustrating a flow of operation of the imaging control system according to the second example embodiment.
[FIG. 6] FIG. 6 is a block diagram illustrating an overall configuration of an imaging apparatus according to a third example embodiment.
[FIG. 7] FIG. 7 is a schematic diagram illustrating a configuration on a surface of the imaging apparatus according to the third example embodiment.
[FIG. 8] FIG. 8 is an image diagram illustrating a state when fingerprints are imaged by the imaging apparatus according to the third example embodiment.
[FIG. 9] FIG. 9 is a schematic diagram illustrating a configuration on a rear surface of the imaging apparatus according to the third example embodiment.
[FIG. 10] FIG. 10 is an image diagram illustrating a slide operation of an imaging apparatus according to a sixth example embodiment.
[FIG. 11] FIG. 11 is an image diagram illustrating a press operation of the imaging apparatus according to the sixth example embodiment.
[FIG. 12] FIG. 12 is a schematic diagram illustrating a configuration of an operation unit according to a first modified example.
[FIG. 13] FIG. 13 is a schematic diagram illustrating a configuration of an operation unit according to a second modified example.
[FIG. 14] FIG. 14 is a schematic diagram illustrating a configuration of an operation unit according to a third modified example.
[FIG. 15] FIG. 15 is a schematic diagram illustrating a configuration of a display unit according to a fourth modified example.

### Description of Example Embodiments

Hereinafter, an imaging control system, an imaging apparatus, an imaging control method, and a computer program according to example embodiments will be described with reference to the drawings.

### <First Example Embodiment>

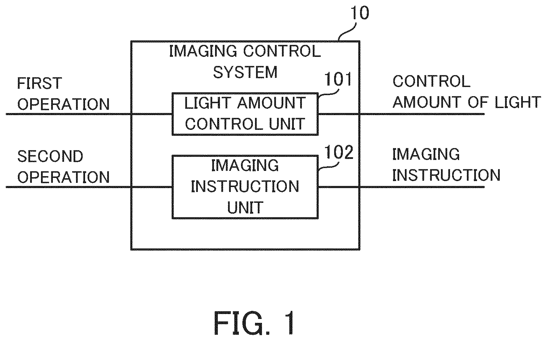

An imaging control system according to a first example embodiment will be described with reference to FIG. 1 to FIG. 3.

### (System Configuration)

First, with reference to FIG. 1, a description will be given to an overall configuration of the imaging control system according to the first example embodiment. FIG. 1 is a block diagram illustrating the overall configuration of the imaging control system according to the first example embodiment.

In FIG. 1, an imaging control system 10 according to the first example embodiment is configured as a system that is configured to perform a control related to imaging of a biological pattern. Here, the "biological pattern" is a pattern or design (in other words, a pattern) that can be obtained by imaging a living body, and is, for example, fingerprints, palmprints, a vein pattern, and the like. The biological pattern can be used, for example, for biometric authentication or the like. The imaging control system 10 is configured to perform a process of controlling an amount of light applied to the living body and a process of giving an instruction to perform the imaging (or an imaging instruction), when imaging the biological pattern. The imaging control system 10 includes, as functional blocks for realizing its function, a light amount control unit 101 and an imaging instruction unit 102.

The light amount control unit 101 is configured to control an amount of light applied to a target person who is a target of imaging a biological pattern (specifically, an amount of light for lighting for imaging an appropriate image) on the basis of a first operation performed by an operator who operates the imaging control system 10. The light amount control unit 101 controls the amount of light in accordance with an operation amount of the first operation. For example, the light amount control unit 101 performs such a control that the amount of light changes only slightly when the operation amount is small, and performs such a control that the amount of light changes significantly when the operation amount is large. The first operation may include an operation of setting a large amount of light (i.e., an operation of increasing), and an operation of setting a small amount of light (i.e., an operation of reducing).

The imaging instruction unit 102 is configured to give an instruction to image the biological pattern, on the basis of a second operation performed by the operator. For example, the imaging instruction unit 102 gives the imaging instruction at a time at which the second operation is performed. Alternatively, the imaging instruction unit 102 may give the imaging instruction at a time at which a predetermined period elapses after the second operation is performed. The second operation is a different operation from the first operation described above (i.e., the operation for controlling the amount of light). The first operation and the second operation, however, may be performed by using a common operation unit.

### (Hardware Configuration)

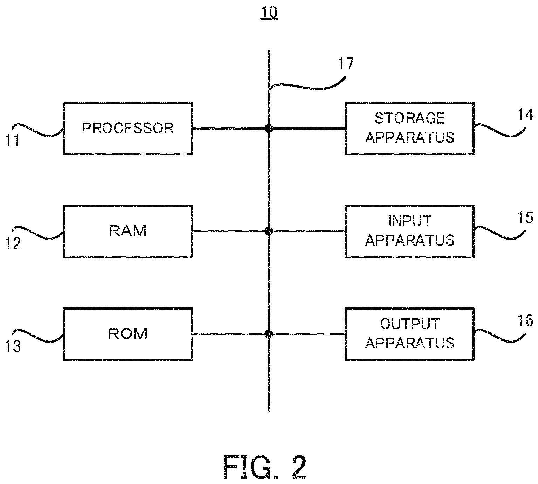

Next, with reference to FIG. 2, a hardware configuration of the imaging control system 10 according to the first example embodiment will be described. FIG. 2 is a block diagram illustrating a hardware configuration of the imaging control system according to the first example embodiment.

As illustrated in FIG. 2, the imaging control system 10 according to the first example embodiment includes a processor 11, a RAM (Random Access Memory) 12, a ROM (Read Only Memory) 13, and a storage apparatus 14. The imaging control system 10 may also include an input apparatus 15 and an output apparatus 16. The processor 11, the RAM 12, the ROM 13, the storage apparatus 14, the input apparatus 15, and the output apparatus 16 are connected through a data bus 17. The imaging control system 10 may include a plurality of processors 11, a plurality of RAMs 12, a plurality of ROMs 13, a plurality of storage apparatuses 14, a plurality of input apparatuses 15, and a plurality of output apparatuses 16.

The processor 11 reads a computer program. For example, the processor 11 is configured to read a computer program stored in at least one of the RAM 12, the ROM 13 and the storage apparatus 14. Alternatively, the processor 11 may read a computer program stored by a computer readable recording medium by using a not-illustrated recording medium reading apparatus. The processor 11 may obtain (i.e., read) a computer program from a not-illustrated apparatus that is located outside the imaging control system 10 through a network interface. The processor 11 controls the RAM 12, the storage apparatus 14, the input apparatus 15, and the output apparatus 16 by executing the read computer program. Especially in the first example embodiment, when the processor 11 executes the read computer program, a functional block for controlling the amount of light applied to the living body and for giving the imaging instruction is realized in the processor 11 (see FIG. 1). As the processor 11, any one of a CPU (Central Processing Unit), a GPU (Graphics Processing Unit), a FPGA (field-programmable gate array), a DSP (digital signal processor), and an ASIC (application specific integrated circuit) may be used. Furthermore, a plurality of those may be used in parallel.

The RAM 12 temporarily stores the computer program to be executed by the processor 11. The RAM 12 temporarily stores the data that is temporarily used by the processor 11 when the processor 11 executes the computer program. The RAM 12 may be, for example, a D-RAM (Dynamic RAM).

The ROM 13 stores the computer program to be executed by the processor 11. The ROM 13 may otherwise store fixed data. The ROM 13 may be, for example, a P-ROM (Programmable ROM).

The storage apparatus 14 stores the data that is stored for a long term by the imaging control system 10. The storage apparatus 14 may operate as a temporary storage apparatus of the processor 11. The storage apparatus 14 may include, for example, at least one of a hard disk apparatus, a magneto-optical disk apparatus, an SSD (Solid State Drive), and a disk array apparatus.

The input apparatus 15 is an apparatus that receives an input instruction from a user of the imaging control system 10. The input apparatus 15 may include, for example, at least one of a keyboard, a mouse, and a touch panel.

The output apparatus 16 is an apparatus that outputs information about the imaging control system 10 to the outside. For example, the output apparatus 16 may be a display apparatus (e.g., a display) that is configured to display the information about the imaging control system 10.

### (Flow of Operation)

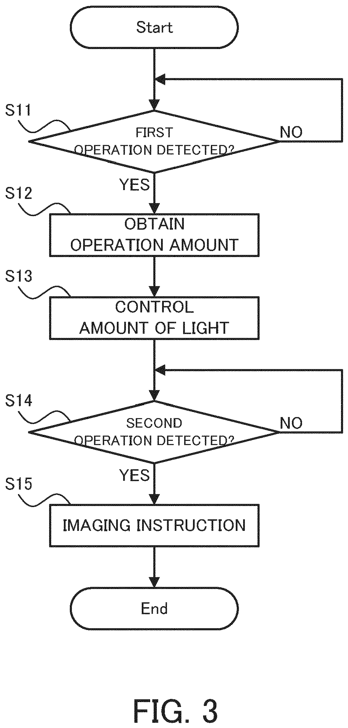

Next, with reference to FIG. 3, a description will be given to a flow of operation of the imaging control system 10 according to the first example embodiment. FIG. 3 is a flowchart illustrating the flow of the operation of the imaging control system according to the first example embodiment.

As illustrated in FIG. 3, in operation of the imaging control system 10 according to the first example embodiment, first, the light amount control unit 101 determines whether or not the first operation is detected (step S11). When the first operation is not detected (the step S11: NO), a process after a step S12 is not performed. However, when the second operation is detected while the first operation is not detected, a step S15 described later may be performed.

When the first operation is detected (the step S11: YES), the light amount control unit 101 obtains the operation amount of the first operation (step S12). Then, the light amount control unit 101 controls the amount of light applied to the target person on the basis of the obtained operation amount of the first operation (step S13).

Subsequently, the imaging instruction unit 102 determines whether or not the second operation is detected (step S14). When the second operation is not detected (the step S14: NO), the process after the step S12 is not performed. However, when the first operation is detected again while the second operation is not detected, the step S12 and the step S13 may be repeatedly performed.

When the second operation is detected (the step S14: YES), the imaging instruction unit 102 gives an instruction to image the target person (step S15).

### (Technical Effect)

Next, an example of a technical effect obtained by the imaging control system 10 according to the first example embodiment will be described.

When the living body (especially, the biological pattern such as fingerprints) is imaged, appropriate imaging may not be performed at a constant amount of light, for example, due to a difference in amount of perspiration or sweat rate, or the like. Therefore, in order to capture an appropriate image, it is desirable to firstly adjust the amount of light in accordance with the target person's condition before performing the imaging.

As described in FIG. 1 to FIG. 3, in the imaging control system 10 according to the first example embodiment, the amount of light applied to the target person is controlled on the basis of the first operation, and the imaging instruction is given on the basis of the second operation. Therefore, according to the imaging control system in the first example embodiment, it is possible to perform the imaging at an appropriate time after controlling the amount of light in accordance with the target person's condition. It is therefore possible to properly image the biological pattern of the target person. Such a technical effect is remarkably exhibited when a clear image is required, for example, as in biometric authentication.

### <Second Example Embodiment>

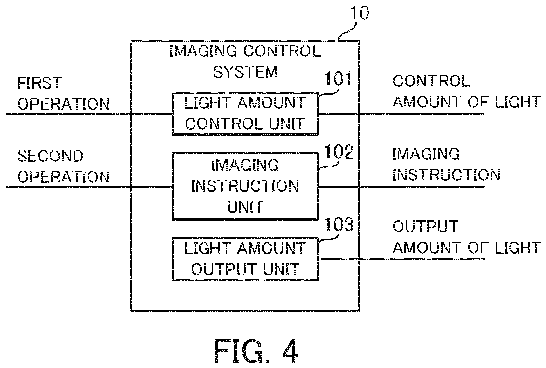

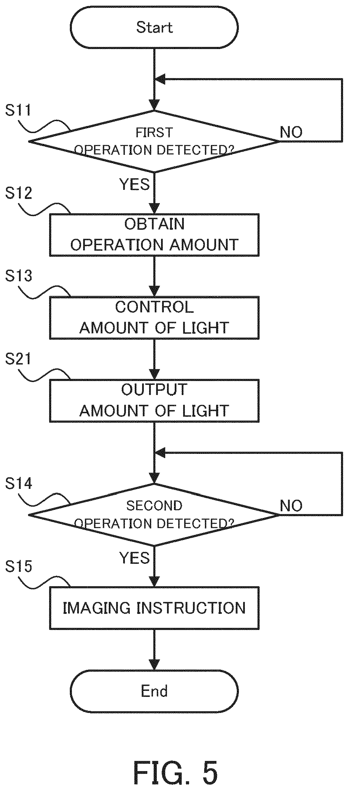

An imaging control system according to a second example embodiment will be described with reference to FIG. 4 and FIG. 5. The second example embodiment is partially different from the first example embodiment described above only in configuration and operation, and is generally the same in the other part. Therefore, the parts that differ from the first example embodiment will be described in detail below, and the other overlapping parts will not be described as appropriate.

### (System Configuration)

First, with reference to FIG. 4, a description will be given to ab overall configuration of the imaging control system according to the second example embodiment. FIG. 4 is a block diagram illustrating the overall configuration of the imaging control system according to the second example embodiment. In FIG. 4, the same components as those illustrated in FIG. 1 carry the same reference numerals.

As illustrated in FIG. 4, the imaging control system 10 according to the second example embodiment includes a light amount output unit 103 in addition to the components in the first example embodiment (see FIG. 1).

The light amount output unit 103 is configured to output information indicating a value of the amount of light applied to the target person. Here, the "value of the amount of light" is a parameter indicating the magnitude of the amount of light, and is obtained, for example, by converting the magnitude of the amount of light into numerals. When the amount of light is controlled by the light amount control unit 101, the light amount output unit 103 outputs the value of the amount of light after the control. The information indicating the value of the amount of light is outputted, for example, to a display apparatus or the like.

### (Hardware Configuration)

A hardware configuration of the imaging control system 10 according to the second example embodiment may be the same as the hardware configuration of the imaging control system 10 according to the first example embodiment (see FIG. 2), and thus, a description thereof will be omitted. The light amount output unit 102 may be realized, for example, by the processor 11.

### (Flow of Operation)

Next, with reference to FIG. 5, a description will be given to a flow of operation of the imaging control system 10 according to the second example embodiment. FIG. 5 is a flowchart illustrating the flow of the operation of the imaging control system according to the second example embodiment.

As illustrated in FIG. 5, in operation of the imaging control system 10 according to the second example embodiment, first, the light amount control unit 101 determines whether or not the first operation is detected (the step S11). When the first operation is detected (the step S11: YES), the light amount control unit 101 obtains the operation amount of the first operation (the step S12). Then, the light amount control unit 101 controls the amount of light applied to the target person on the basis of the obtained operation amount of the first operation (the step S13).

Subsequently, in the second example embodiment, the light amount output unit 103 outputs the information indicating the value of the amount of light (step S21). The light amount output unit 103 may also output the information indicating the value of the amount of light even when the amount of light is not controlled (in other words, when the first operation is not detected). For example, the light amount output unit 103 may output the information indicating the value of the amount of light in a predetermined period.

Subsequently, the imaging instruction unit 102 determines whether or not the second operation is detected (the step S14). When the second operation is detected (the step S14: YES), the imaging instruction unit 102 gives an instruction to image the target person (the step S15).

### (Technical Effect)

Next, an example of a technical effect obtained by the imaging control system 10 according to the second example embodiment will be described.

As described in FIG.4 and FIG. 5, in the imaging control system 10 according to the second example embodiment, the information indicating the value of the amount of light is outputted by the light amount output unit 103. Therefore, according to the imaging control system 10 in the second example embodiment, it is possible to understand how the amount of light is controlled, by performing the first operation. For example, when information indicating the amount of light is outputted to a display apparatus, the current amount of light can be visually known. This facilitates a work of adjusting the amount of light to an appropriate value.

### <Third Example Embodiment>

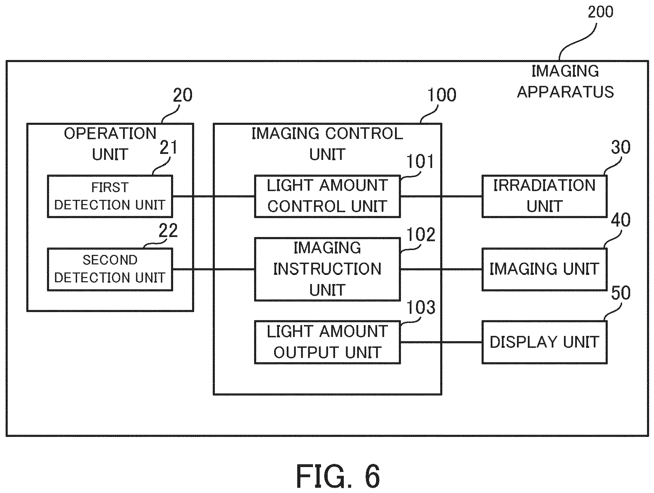

An imaging apparatus according to a third example embodiment will be described with reference to FIG. 6 to FIG. 9. The third example embodiment will be described with an example in which the imaging control system 10 as already described functions as a part of the imaging apparatus (specifically, an imaging control unit 100 described later). The third example embodiment is partially different from the first and second example embodiments described above only in configuration and operation, and is generally the same in the other part. Therefore, the parts that differ from the first and second example embodiments will be described in detail below, and the other overlapping parts will not be described as appropriate.

### (Apparatus Configuration)

First, with reference to FIG.6, a description will be given to an overall configuration of the imaging apparatus according to the third example embodiment. FIG. 6 is a block diagram illustrating the overall configuration of the imaging apparatus according to the third example embodiment. In FIG. 6, the same components as those illustrated in FIG. 1 and FIG. 4 carry the same reference numerals.

As illustrated in FIG. 6, an imaging apparatus 200 according to the third example embodiment includes an imaging control unit 100, an operation unit 20, an irradiation unit 30, an imaging unit 40, and a display unit 50.

The imaging control unit 100 is configured to have the same functions as those of the imaging control system 10 according to the first example embodiment and the second example embodiment described above. Specifically, it includes the light amount control unit 101, the imaging instruction unit 102, and the light amount output unit 103. The hardware configuration of the imaging control unit 100 may be the same as the hardware configuration of the imaging control system 10 (see FIG. 2), and thus, a description thereof will be omitted. The light amount output unit 102 may be realized, for example, by the processor 11 as in the second example embodiment described above. The operation unit 20 may be realized, for example, by the input apparatus 15. The display 50 may be realized by the output apparatus 16.

The operation unit 20 is an input unit provided to accept or receive an operation by the operator, and includes, for example, a switch and various sensors. The operation unit 20 includes a first detection unit 21 and a second detection unit 22. That is, the operation unit 20 is provided as a common operation unit that is configured to detect the first operation and the second operation. The first detection unit 21 is configured to detect the first operation by the operator. The operation amount of the first operation detected by the first detection unit 21 is configured to be outputted to the light amount control unit 101 of the imaging control unit 100. The second detection unit 22 is configured to detect the second operation by the operator. The presence or absence of the second operation detected by the second detection unit 22 is configured to be outputted to the imaging instruction unit 102 of the imaging control unit 100.

The irradiation unit 30 is configured to irradiate the target person (especially a part where the biological pattern of the target person is imaged) with light. The irradiation unit 30 includes, for example, a LED (Light Emitting Diode) or the like. A plurality of irradiation units 30 may be provided. The amount of light applied by the irradiation unit 30 is controllable by the light amount control unit 101 of the imaging control unit 100.

The imaging unit 40 is configured to image the biological pattern of the target person. The imaging unit 40 includes, for example, a small camera or the like. The imaging unit 40 is configured to perform the imaging at a time at which the imaging instruction unit 102 gives an instruction.

The display unit 50 is configured to display the information about the amount of light applied by the irradiation unit 30. The display unit 50 includes, for example, a liquid crystal display or the like. The display unit 50 is configured to display the information about the amount of light, on the basis of the information outputted from the light amount output unit 103. The display unit 50 may be configured as an external apparatus of the imaging apparatus 200 (e.g., a display of a personal computer, etc.).

### (Configuration on Imaging Unit Side)

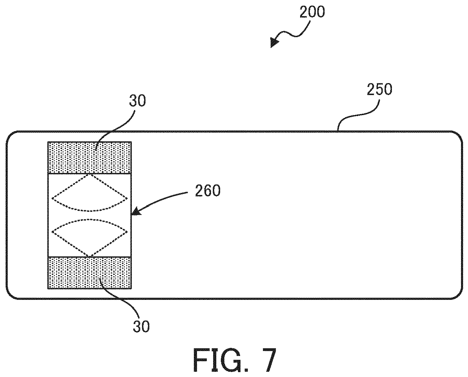

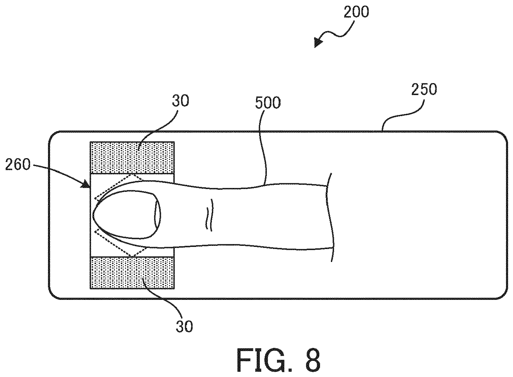

Next, with reference to FIG. 7 and FIG. 8, a specific configuration on a side of the imaging unit 40 of the imaging apparatus 200 according to the third example embodiment (i.e., a surface on a side on which fingerprints are imaged) will be described. FIG. 7 is a schematic diagram illustrating a configuration on a surface of the imaging apparatus according to the third example embodiment. FIG. 8 is an image diagram illustrating a state when fingerprints are imaged by the imaging apparatus according to the third example embodiment. The following will be described with an example in which the imaging apparatus 200 is configured as an image apparatus that images fingerprints.

As illustrated in FIG. 7, the imaging apparatus 200 is provided with an imaging area 260 on a surface of a housing 250 (hereinafter referred to as a "surface" as appropriate). In the imaging area 260, the imaging unit 40 is disposed on a back side, for example, via a glass or the like, and it is possible to image a living body in contact with the imaging area. Furthermore, on a lateral side of the imaging area 260, two irradiation units 30 are provided. The irradiation units 30 are configured to apply light to the imaging area (in other words, to the living body in the imaging area 260).

As illustrated in FIG. 8, when fingerprints are imaged, the target person who is an imaging target brings his or her finger 500 into contact with the imaging area. Then, light is applied to the finger 500 from the irradiation unit 30. In such a condition, the imaging unit 40 images the target person's fingerprints.

### (Configuration on Operation Unit Side)

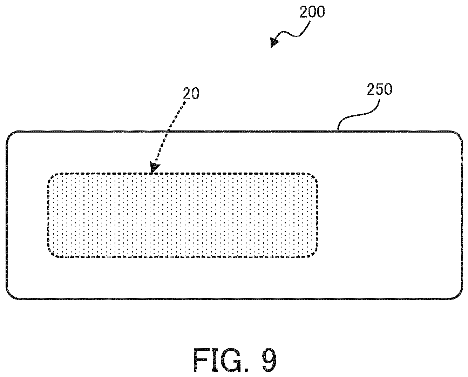

Next, with reference to FIG.9, a specific configuration on a side of the operation unit 20 of the imaging apparatus 200 according to the third example embodiment (i.e., a surface on a side on which the first detection unit 21 and the second detection unit 22 are provided) will be described. FIG. 9 is a schematic diagram illustrating a configuration on a rear surface of the imaging apparatus according to the third example embodiment.

As illustrated in FIG. 9, the imaging apparatus 200 includes the operation unit 20 on a surface of the housing 250 opposite to the side on which the imaging unit 40 is provided (hereinafter, referred to as a "rear surface" as appropriate). The configuration of the operation unit 20 is not particularly limited as long as it can detect the first operation and the second operation. That is, the first detection unit 21 and the second detection unit 22 may be properly configured by various sensors, buttons, switches or the like. Examples of the first detection unit 21 and the second detection unit 22 will be described in detail in other example embodiments described later.

### (Flow of Operation)

A flow of operation of the imaging apparatus 200 according to the third example embodiment may be the same as the flow of the operation of the imaging control system 10 according to the second example embodiment (see FIG. 5), and thus, a description thereof will be omitted.

### (Technical Effect)

Next, an example of a technical effect obtained by the imaging control apparatus 200 according to the third example embodiment will be described.

As described in FIG. 6 to FIG. 8, in the imaging apparatus 200 according to the third example embodiment, the first operation is detected by the first detection unit 21, and the amount of light applied from the irradiation unit 30 is controlled on the basis of the operation amount of the first operation. Therefore, the amount of light can be controlled in accordance with the target person's condition. Furthermore, in the imaging apparatus 200 according to the third example embodiment, the second operation is detected by the second detection unit 22, and the imaging instruction is given to the imaging unit 40. Therefore, it is possible to perform the imaging at an appropriate time.

Furthermore, especially in the third example embodiment, the imaging unit 40 is disposed on the surface of the housing 250, and the operation unit 20 is disposed on the rear surface. Therefore, a series of operations of performing the imaging by adjusting the amount of light while the finger 500 of the target person is fixed in the imaging area 260, may be performed by the operator with one hand. Such a technical effect is significantly exerted, for example, when the operator needs to fix the finger 500 of the target person (e.g., when the fingerprints of a newborn or the like are imaged, etc.). According to a study by the inventors of the present application, since the amount of perspiration varies significantly at the time of growth, the amount of light suitable for the imaging also changes significantly. Therefore, the imaging apparatus 200 according to the third example embodiment that is configured to control the amount of light is extremely useful when the newborn is a target.

### <Fourth Example Embodiment>

An imaging apparatus according to a fourth example embodiment will be described. The fourth example embodiment describes specific examples of the first detection unit 21 in the imaging control system 10 according to the third embodiment already described (e.g., see FIG. 6), and specific examples of the first operation detected by the first detection unit 21. Therefore, in the following, a description will be omitted for those already described, such as the apparatus configuration and the overall operation flow.

The first detection unit 21 may include, for example, a slide switch. In this case, the first detection unit 21 may detect a slide amount of the slide switch, as the operation amount of the first operation. Furthermore, it may be determined whether to increase or reduce the amount of light depending on a sliding direction.

The first detection unit 21 may be configured, for example, as a wheel-shaped touch panel. In this case, the first detection unit 21 may detect the slide amount on the touch panel, as the operation amount of the first operation. Furthermore, it may be determined whether to increase or reduce the amount of light depending on the sliding direction (i.e., a rotation direction).

The first detection unit 21 may be configured as a physical wheel-type switch. In this case, the first detection unit 21 may detect a rotation amount of the wheel-type switch, as the operation amount of the first operation. Furthermore, it may be determined whether to increase or reduce the amount of light depending on the sliding direction (i.e., the rotation direction). In addition, it may be determined whether to increase or reduce the amount of light depending on the rotation direction.

The first detection unit 21 may be configured as a stick-type switch that can be tilted in a 360-degree direction. In this case, the first detection unit 21 may detect an amount of tilting the stick-type switch, as the operation amount of the first operation. Furthermore, it may be determined whether to increase or reduce the amount of light depending on a tilting direction. When performing the first operation in the operation unit 20, the operator may rotate a wheel type switch of the operation unit 20.

### (Technical Effect)

Next, an example of a technical effect obtained by the imaging control apparatus 200 according to the fourth example embodiment will be described.

In the imaging apparatus 200 according to the fourth example embodiment, it is possible to detect the first operation in various ways as described above. Therefore, it is possible to realize an appropriate light amount control in accordance with usages of the apparatus or the like. The configuration described above is merely an example, and the first operation may be detected in another configuration.

### <Fifth Example Embodiment>

An imaging apparatus according to a fifth embodiment will be described. The fifth example embodiment describes specific examples of the second detection unit 22 in the imaging control system 10 according to the third embodiment already described (e.g., see FIG. 6), and specific examples of the second operation detected by the second detection unit 22. Therefore, in the following, a description will be omitted for those already described, such as the apparatus configuration and the overall operation flow.

The second detection unit 22 may include, for example, a pressure sensor. In this case, the second detection unit 22 may detect that the second operation is performed, when a pressure detected by the pressure sensor exceeds a predetermined upper limit threshold (e.g., when the second detection unit 22 is pressed). Alternatively, the second detection unit 22 may detect that the second operation is performed, when the pressure detected by the pressure sensor is less than or equal a predetermined lower limit threshold (e.g., when the finger is released from the second detection unit 22).

The second detection unit 22 may include, for example, a physical button or switch. In this case, the second detection unit 22 may detect that the second operation is performed, when the button or switch is pressed. Alternatively, the second detection unit 22 may detect that the second operation is performed, when the finger is released from the button or switch which is pressed.

### (Technical Effect)

Next, an example of a technical effect obtained by the imaging control apparatus 200 according to the fifth example embodiment will be described.

In the imaging apparatus 200 according to the fifth embodiment, it is possible to detect the second operation in various ways as described above. Therefore, it is possible to realize an appropriate imaging control in accordance with the usages of apparatus or the like. The configuration described above is merely an example, and the second operation may be detected in another configuration.

### <Sixth Example Embodiment>

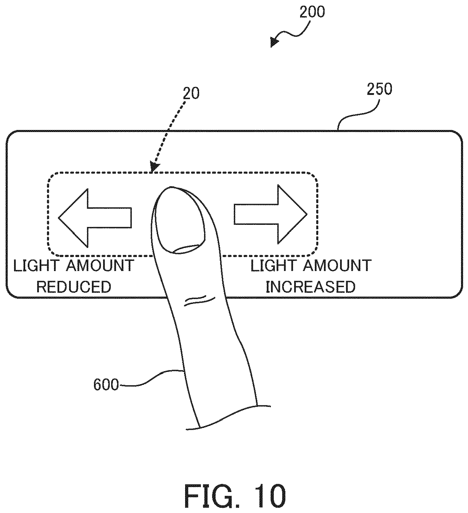

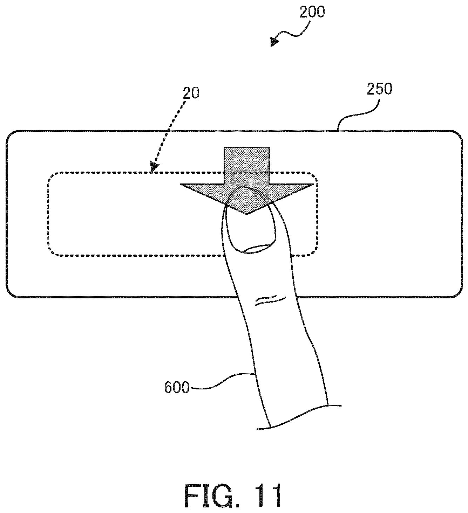

An imaging apparatus according to a sixth embodiment will be described with reference to FIG. 10 and FIG. 11. FIG. 10 is an image diagram illustrating a slide operation of the imaging apparatus according to the sixth example embodiment. FIG. 11 is an image diagram illustrating a press operation of the imaging apparatus according to the sixth example embodiment. The sixth example embodiment describes specific examples of the first detection unit 21 and the second detection unit 22 in the imaging control system 10 according to the third embodiment already described (e.g., see FIG. 6), and specific examples of the first operation and the second operation detected respectively by the first detection unit 21 and the second detection unit 22. Therefore, in the following, a description will be omitted for those already described, such as the apparatus configuration and the overall operation flow.

As illustrated in FIG. 10, the operation unit 20 according to the sixth example embodiment includes the first detection unit 21 including the slide switch, and the second detection unit 22 including the pressure sensor. When performing the first operation, the operator may slide his or her finger 600 on the operation unit 20. At this time, when the finger 600 is slid to a left side of the figure, the amount of light is controlled to be reduced. On the other hand, when the finger 600 is slid to a right side of the figure, the amount of light is controlled to be increased.

As illustrated in FIG. 11, when performing the second operation, the operator may press the finger 600 on the operation unit 20. Any part of the operation unit 20 may be pressed, and it is possible to perform the second operation immediately after performing the first operation. In the example illustrated in FIG. 11, the second operation is performed while the finger 600 is slid to the vicinity of a right end of the operation unit, and thus, the imaging is performed in a state where the amount of light is adjusted to be increased.

### (Modified Examples)

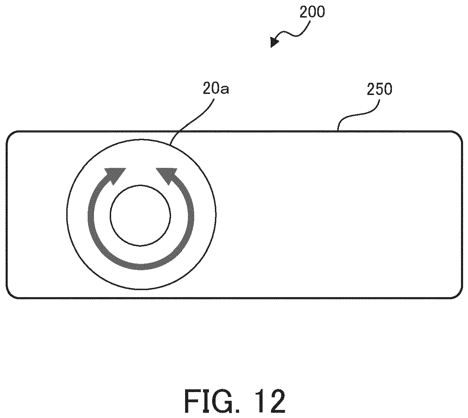

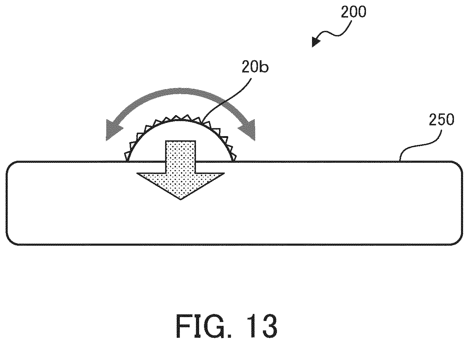

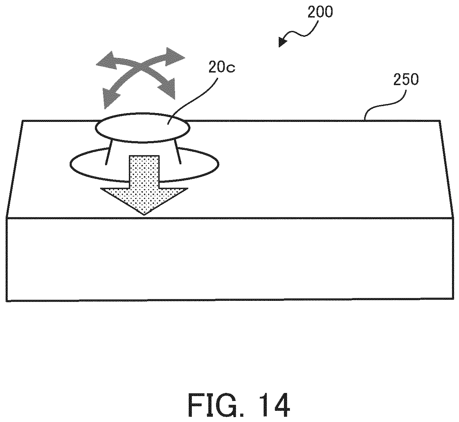

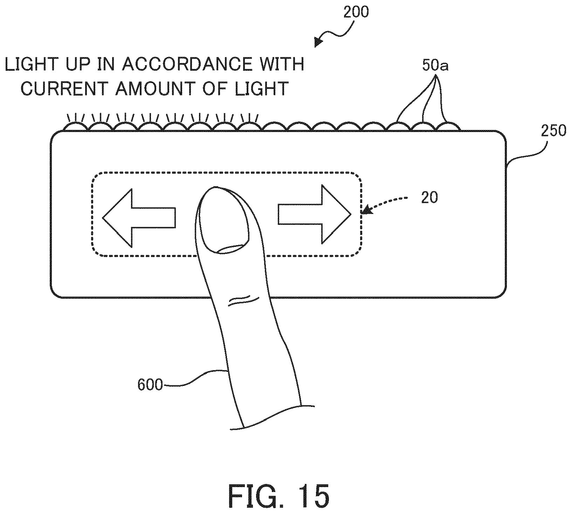

Next, with reference to FIG. 12 to FIG. 15, modified examples of the imaging apparatus 200 according to the sixth embodiment will be described. FIG. 12 is a schematic diagram illustrating a configuration of an operation unit according to a first modified example. FIG. 13 is a schematic diagram illustrating a configuration of an operation unit according to a second modified example. FIG. 14 is a schematic diagram illustrating a configuration of an operation unit according to a third modified example. FIG. 15 is a schematic diagram illustrating a configuration of a display unit according to a fourth modified example.

As illustrated in FIG. 12, an operation unit 20a according to the first modified example is configured as a wheel-shaped panel. When performing the first operation in the operation unit 20a, the operator may slide the finger 600 so as to draw a circle on the operation unit 20a. In this case, it may be determined whether to increase or reduce the amount of light depending on the sliding direction (i.e., the rotation direction). Furthermore, when performing the second operation in the operation unit 20a, the operator may press a part where the sliding by the first operation is ended (or a central part of a wheel provided as a physical switch).

As illustrated in FIG. 13, an operation unit 20b according to the second modified example is configured as a pressable physical wheel-type switch (FIG. 13 is a diagram of the housing 250 of the imaging apparatus 200 when viewed from a lateral side). When performing the first operation in the operation unit 20b, the operator may rotate the wheel-type switch of the operation unit 20b. In this case, it may be determined whether to increase or reduce the amount of light depending on the rotation direction. Furthermore, when performing the second operation in the operation unit 20b, the operator may press the wheel-type switch.

As illustrated in FIG. 14, an operation unit 20c according to the third modified example is configured as a pressable stick-type switch. When performing the first operation in the operation unit 20c, the operator may tilt a stick of the operation unit 20c. In this case, it may be determined whether to increase or reduce the amount of light depending on the tilting direction. Furthermore, when performing the second operation in the operation unit 20c, the operator may press the stick-type switch.

As illustrated in FIG. 15, a display unit 50a according to the fourth modified example is disposed on a side surface of the housing 250 as a plurality of LEDs. The display unit 50a is configured to change a lighting state depending on the current amount of light (in other words, the operation amount of the first operation). For example, the display unit 50a may not light up when the amount of light is the lowest, and may be gradually light up from a left side of the figure as the amount of light increases, and may all light up when the amount of light is the highest.

### (Technical Effect)

Next, an example of a technical effect obtained by the imaging control system 10 according to the sixth example embodiment will be described.

As described in FIG. 10 to FIG. 15, in the imaging apparatus 200 according to the sixth example embodiment, it is possible to detect the two operations (i.e., the first operation and the second operation) that are different, by using the common operation unit 20. Therefore, it is possible to control the amount of light applied from the irradiation unit 30 on the basis of the first operation, and it is also possible to give the imaging instruction to the imaging unit on the basis of the second operation. Therefore, the biological pattern of the target person can be properly imaged.

### <Supplementary Notes>

The example embodiments described above may be further described as, but not limited to, the following Supplementary Notes.

### (Supplementary Note 1)

An imaging control system described in Supplementary Note 1 is an imaging control system including: a light amount control unit that controls an amount of light applied to a target person in accordance with an operation amount of a first operation by an operator; and an imaging instruction unit that gives an instruction to image a biological pattern of the target person in response to a second operation that is different from the first operation by the operator.

### (Supplementary Note 2)

An imaging control system described in Supplementary Note 2 is the imaging control system described in Supplementary Note 1, wherein the biological pattern is fingerprints, and the light amount control unit controls the amount of light applied to a finger of the target person.

### (Supplementary Note 3)

An imaging control system described in Supplementary Note 3 is the imaging control system described in Supplementary Note 1 or 2, further comprising an output unit that outputs a value of the amount of light controlled by the light amount control unit.

### (Supplementary Note 4)

An imaging apparatus described in Supplementary Note 4 is an imaging apparatus including: an imaging unit that images a biological pattern of a target person; an irradiation unit that irradiates a living body of the target person with light; a first detection unit that detects an operation amount of a first operation by an operator; a light amount control unit that controls an amount of light applied to the target person in accordance with the operation amount of the first operation; a second detection unit that detects a second operation that is different from the first operation by the operator; and an imaging instruction unit that gives an instruction to image the biological pattern of the living body of the target person in response to the second operation.

### (Supplementary Note 5)

An imaging apparatus described in Supplementary Note 5 is the imaging apparatus described in Supplementary Note 4, wherein the first detection unit and the second detection unit detect operations performed on a common operation unit, as the first operation and the second operation, respectively.

### (Supplementary Note 6)

An imaging apparatus described in Supplementary Note 6 is the imaging apparatus described in Supplementary Note 4 or 5, wherein the first detection unit detects a slide amount of a slide operation by the operator, as the operation amount of the first operation.

### (Supplementary Note 7)

An imaging apparatus described in Supplementary Note 7 is the imaging apparatus described in any one of Supplementary Notes 4 to 6, wherein the second detection unit detects a press operation by the operator, as the second operation.

### (Supplementary Note 8)

An imaging apparatus described in Supplementary Note 8 is the imaging apparatus described in any one of Supplementary Notes 4 to 7, wherein the first detection unit and the second detection unit detect operations performed on an operation unit provided on a rear surface side when viewed from the imaging unit, in a housing in which the imaging unit is provided, as the first operation and the second operation, respectively.

### (Supplementary Note 9)

An imaging control method described in Supplementary Note 9 is an imaging control method including: controlling an amount of light applied to a target person in accordance with an operation amount of a first operation by an operator; and giving an instruction to image a biological pattern of the target person in response to a second operation that is different from the first operation by the operator.

### (Supplementary Note 10)

A computer program described in Supplementary Note 10 is a computer program that operates a computer: to control an amount of light applied to a target person in accordance with an operation amount of a first operation by an operator; and to give an instruction to image a biological pattern of the target person in response to a second operation that is different from the first operation by the operator.

This disclosure is not limited to the examples described above and is allowed to be changed, if desired, without departing from the essence or spirit of the invention which can be read from the claims and the entire specification. An imaging control system, an imaging apparatus, an imaging control method, and a computer program with such modifications are also intended to be within the technical scope of this disclosure.

### Description of Reference Codes

10 Imaging control system
20 Operation unit
21 First detection unit
22 Second detection unit
30 Irradiation unit
40 Imaging unit
50 Display unit
101 Light amount control unit
102 Imaging instruction unit
103 Light amount output unit
200 Imaging apparatus
250 Housing
260 Imaging area
500 Target person's finger
600 Operator's finger

## Claims

1. An imaging control system comprising:
a light amount control unit that controls an amount of light applied to a target person in accordance with an operation amount of a first operation by an operator; and
an imaging instruction unit that gives an instruction to image a biological pattern of the target person in response to a second operation that is different from the first operation by the operator.

2. The imaging control system according to claim 1, wherein
the biological pattern is fingerprints, and
the light amount control unit controls the amount of light applied to a finger of the target person.

3. The imaging control system according to claim 1 or 2, further comprising an output unit that outputs a value of the amount of light controlled by the light amount control unit.

4. An imaging apparatus comprising:
an imaging unit that images a biological pattern of a target person;
an irradiation unit that irradiates a living body of the target person with light;
a first detection unit that detects an operation amount of a first operation by an operator;
a light amount control unit that controls an amount of light applied to the target person in accordance with the operation amount of the first operation;
a second detection unit that detects a second operation that is different from the first operation by the operator; and
an imaging instruction unit that gives an instruction to image the biological pattern of the living body of the target person in response to the second operation.

5. The imaging apparatus according to claim 4, wherein the first detection unit and the second detection unit detect operations performed on a common operation unit, as the first operation and the second operation, respectively.

6. The imaging apparatus according to claim 4 or 5, wherein the first detection unit detects a slide amount of a slide operation by the operator, as the operation amount of the first operation.

7. The imaging apparatus according to any one of claims 4 to 6, wherein the second detection unit detects a press operation by the operator, as the second operation.

8. The imaging apparatus according to any one of claims 4 to 7, wherein the first detection unit and the second detection unit detect operations performed on an operation unit provided on a rear surface side when viewed from the imaging unit, in a housing in which the imaging unit is provided, as the first operation and the second operation, respectively.

9. An imaging control method comprising:
controlling an amount of light applied to a target person in accordance with an operation amount of a first operation by an operator; and
giving an instruction to image a biological pattern of the target person in response to a second operation that is different from the first operation by the operator.

10. A computer program that operates a computer:
to control an amount of light applied to a target person in accordance with an operation amount of a first operation by an operator; and
to give an instruction to image a biological pattern of the target person in response to a second operation that is different from the first operation by the operator.
